# EUROPEAN PATENT APPLICATION

(11) **EP 1 816 539 A2**
(43) Date of publication of application: **08.08.2007**
(21) Application number: 06125972.7
(22) Date of filing: 12.12.2006
(51) Int. Cl.: G06F 1/16, G06F 1/20

(54) **A cradle for use with a portable electronic appliance and a portable electronic appliance set including the cradle**

(30) Priority: 04.01.2006 KR 20060000883
(71) Applicant: SAMSUNG ELECTRONICS CO., LTD., Suwon-si Gyeonggi-do 442-742 (KR)
(72) Inventor: Lee, Kwang-youb, Seoul (KR)
(74) Representative: Davies, Robert Ean

(57) **Abstract**

A cradle (110) for use with a portable electronic appliance (105). The cradle includes a frame (111), including a mounting portion (112) in which the portable electronic appliance is mounted, a temperature sensor (140) to measure a temperature around the portable electronic appliance, a fan (135) to cool down the portable electronic appliance, a power supplying unit (120) to supply electric power to the fan, and a controller (130). The controller drives the fan when the temperature measured by the temperature sensor is determined to be equal to or higher than a predetermined temperature according to measurements of the temperature sensor.

## Description

The present invention relates to a cradle for use with portable electronic appliances and a portable electronic appliance set including the cradle and a portable electronic appliance mounted in the cradle.

With recent advances of information and communication technologies, various kinds of portable electronic appliances, such as mobile telephones, personal digital assistants (PDAs), and portable multimedia players (PMPs) have been developed. Such portable electronic appliances are mounted in cradles to facilitate convenient access thereto and to protect the device in a potentially dangerous environment, such as a car or a home.

However, when the ambient temperature of the environment is high, for example, in the summer season or in a tropical region, portable electronic appliances mounted in cradles may operate improperly or may be damaged due to overheating. Further, batteries in the appliances may explode. In particular, overheating of portable electronic appliances may happen frequently when the appliances are mounted in cradles in cars.

Embodiments of the present invention provide a cradle including a fan that operates when a temperature around a portable electronic appliance is equal to or higher than a predetermined temperature, in order to cool down the portable electronic appliance, and a portable electronic appliance set including the cradle.

According to an aspect of the present invention, there is provided a cradle for use with a portable electronic appliance, the cradle including: a frame, including a mounting portion in which the portable electronic appliance is mounted; a temperature sensor to measure a temperature around the portable electronic appliance; a fan to cool down the portable electronic appliance; a power supplying unit to supply electric power to the fan; and a controller to drive the fan when the temperature measured by the temperature sensor is equal to or higher than a predetermined temperature.

The predetermined temperature when the controller drives the fan may be in a range of 45°C - 60°C.

The power supplying unit may include a direct current (DC) port to receive a DC voltage from an exterior of the portable electronic appliance.

The power supplying unit may include a connector that is connected to the portable electronic appliance to receive the electric power from the portable electronic appliance.

The power supplying unit may include a primary battery or a secondary battery.

The cradle may further include: a bracket that is elastically biased in a direction of attaching the portable electronic appliance to the mounting portion.

An air path, through which the fan blows air, may be formed between a rear surface of the portable electronic appliance and a surface of the frame facing the portable electronic appliance.

Additional and/or other aspects and advantages of the invention will be set forth in part in the description which follows and, in part, will be obvious from the description, or may be learned by practice of the invention.

According to another aspect of the present invention there is provided a portable electronic appliance set comprising: a portable electronic appliance; and a cradle in which the portable electronic appliance is mounted, wherein the cradle for the portable electronic appliance comprises: a frame, including a mounting portion in which the portable electronic appliance is mounted; a temperature sensor to measure a temperature around the portable electronic appliance; a fan to cool down the portable electronic appliance; a power supplying unit to supply electric power to the fan; and a controller to drive the fan when the temperature measured by the temperature sensor is determined to be equal to or higher than a predetermined temperature according to measurements of the temperature sensor.

According to another aspect of the present invention there is provided a cradle for use with a portable electronic appliance mounted therein, the cradle comprising: a temperature sensor to measure an ambient temperature in a vicinity of the portable electronic appliance so as to generate a signal that indicates a temperature of the portable electronic appliance; a fan to generate an air flow that cools the temperature of the portable electronic appliance when operated; and a controller to operate the fan when the signal indicates that the temperature of the portable electronic appliance is equal to or higher than a first temperature, and to stops the fan when the signal indicates that the temperature of the portable electronic appliance is equal to or lower than a second temperature.

For a better understanding of the invention, and to show how embodiments of the same may be carried into effect, reference will now be made, by way of example, to the accompanying diagrammatic drawings in which:
FIG. 1 is a perspective view of a cradle for a portable electronic appliance set including a cradle and a portable electronic appliance mounted in the cradle according to an embodiment of the present invention;
FIG. 2 is a rear view of the cradle of FIG. 1;
FIG. 3 is a cross-sectional view of the portable electronic appliance set in which the portable electronic appliance is mounted in the cradle, according to the embodiment of FIG. 1; and
FIG. 4 is a block diagram of a circuit structure of the cradle of FIG. 3.

Reference will now be made in detail to embodiments of the present invention, examples of which are illustrated in the accompanying drawings, wherein like reference numerals refer to the like elements throughout. The embodiments are described below in order to explain the present invention by referring to the figures.

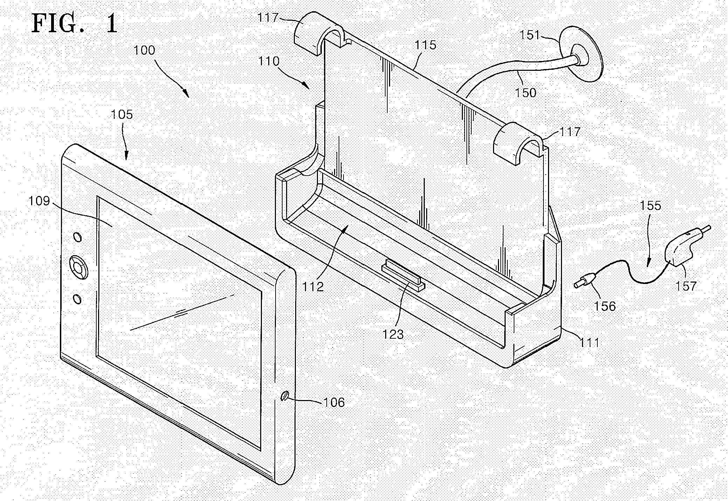

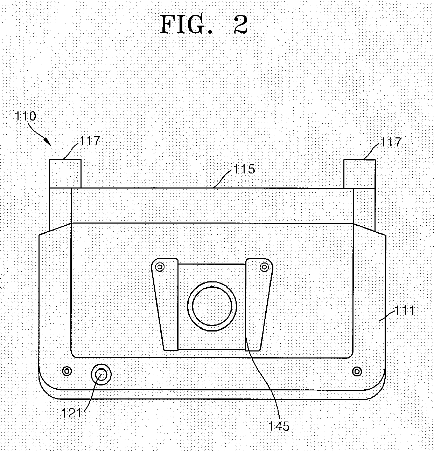

FIG. 1 is a perspective view of a portable electronic appliance set 100 including a cradle 110 and a portable electronic appliance 105 mounted in the cradle 110 according to an embodiment of the present invention, and FIG. 2 is a rear view of the cradle 105 shown in FIG. 1.

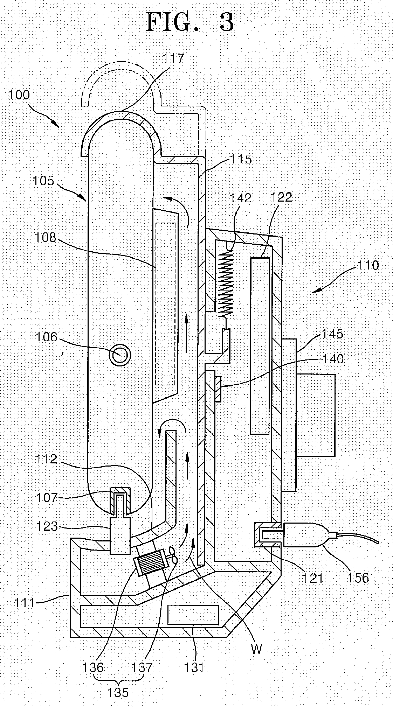

As shown in FIG. 1, the portable electronic appliance set 100 includes a portable electronic appliance 105 and the cradle 110. The portable electronic appliance 105 has the form of a square panel with a thickness of about 1 - 2 cm, and includes a display panel 109 on a front portion thereof and a battery 108 (refer to FIG. 3) to supply power on a rear portion thereof. The portable electronic appliance 105 is mounted in the cradle 110. The battery 108 is a secondary battery that may be recharged. The portable electronic appliance 105 includes a direct current (DC) port 106 that is directly connected to a DC supplying terminal 156 of a power supplying cord 155 on a side thereof and a female connector 107 (refer to FIG. 3) that is connected to a male connector 123 of the cradle on a lower portion thereof to allow the portable electronic appliance 105 to receive power from the cradle 110.

The cradle 110 includes a first frame 111 having a mounting portion 112 that surrounds a lower portion of the portable electronic appliance 105 to stably support the portable electronic appliance 105. A second frame 115, having a bracket 117 that surrounds an upper portion of the portable electronic appliance 105, prevents the portable electronic appliance 105 from escaping from the mounting portion 112. In addition, the cradle 110 further includes a fixture 150 to mount the cradle 110 in a car. The fixture 150 includes an absorbing plate 151 to be fixed on a front glass (not shown) of the car. The first frame 111 includes a fixture coupling portion 145 for connecting the first frame to the fixture 150.

The first frame 111 includes a DC port 121 on a rear portion thereof to be connected to the DC supplying terminal 156 of the power supplying cord 155. The power supplying cord 155 supplies a DC voltage from a battery of an external device (i.e., a car, which isnot shown), and includes a plug 157 that may be inserted into a power supplying socket (e.g., a cigarette jack) of the car. Although it is not shown in the drawings, a power supplying cord, including an adapter that converts an alternating current (AC) voltage into the DC voltage and supplies the DC voltage to the cradle 110, may be connected to the DC port 121.

The male connector 123 connected to the female connector 107 of the portable electronic appliance 105 is formed on the mounting portion 112 of the first frame 111. The male connector 123 supplies external power supplied from the DC port 121 of the cradle 110 to the portable electronic appliance 105. A user may supply electric power to the electronic appliance 105 by inserting the DC supplying terminal 156 of the power supplying cord 155 into the DC port 121 of the cradle 110 and mounting the portable electronic appliance 105 in the cradle 110, or by directly inserting the DC supplying terminal 156 into a DC port 106 of the portable electronic appliance 105.

FIG. 3 is a cross-sectional view of the portable electronic appliance set 100 in which the portable electronic appliance 105 is mounted in the cradle 110.

As shown in FIG. 3, the second frame 115 is coupled to the first frame 111 and slides in a vertical direction in the first frame 111 by a predetermined width. When the second frame 115 is lifted as indicated by a double-dot chain line, the portable electronic appliance 105 may be mounted in the mounting portion 112 or separated from the mounting portion 112. When the second frame 115 is moved downward when the portable electronic appliance 105 is mounted in the mounting portion 112, the bracket 117 surrounds the upper portion of the portable electronic appliance 105 as indicated by a solid line so that the portable electronic appliance 105 is not allowed to escape from the mounting portion 112.

The second frame 115 is elastically biased downward by an elastic member (i.e., a spring) 142, an end of which is coupled to the first frame 111 and the other end of which is coupled to the second frame 115. Therefore, the bracket 117 elastically biases the portable electronic appliance 105 onto the mounting portion 112. Thus, the portable electronic appliance 105 is not allowed to escape from the cradle 110 regardless of an application of any external forces.

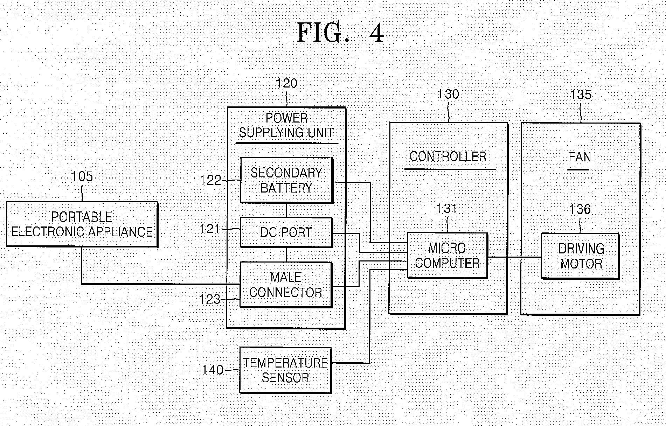

FIG. 4 is a block diagram illustrating a structure of an inner circuit in the cradle 110, according to an embodiment of the present invention.

As shown in FIGS. 3 and 4, the cradle 110 includes a fan 135 to cool down the overheated portable electronic appliance 105, a temperature sensor 140 to measure a temperature around the portable electronic appliance 105, a controller 130 to control operations of the fan 135, and a power supplying unit 120 to supply the electric power to the fan 135. The controller 130 may include a micro computer 131 to perform logic calculations. However, it is noted that the micro computer 131 may be substituted for another similar device or may be discarded altogether.

The temperature sensor 140 is installed on the first frame 111 to be adjacent to the portable electronic appliance 105, and is electrically connected to the micro computer 131 of the controller 130 to transmit temperature signals corresponding to the measured temperatures to the micro computer 131. The position where the temperature sensor 140 is installed is not limited to the example of FIG. 3, however. For example, the temperature sensor 140 may in fact be installed on any portion of the first frame where the temperature around the portable electronic appliance 105 is measurable, such as the mounting portion 112.

The fan 135 includes a driving motor 136, and a rotor 137 that is rotated by the driving motor 136. In addition, the fan 135 is installed under the mounting portion 112 in the first frame 111. When the portable electronic appliance 105 is mounted on the mounting portion 112, an air flow path is formed between a rear surface of the portable electronic appliance 105 and a surface of the second frame 115 that faces the rear surface of the portable electronic appliance 105. When the fan 135 operates, the fan 135 flows air so as to form an air flow (W) along the flowing path (see FIG. 3). The air flow (W) cools down the overheated portable electronic appliance 105. The driving motor 136 of the fan 135 is electrically connected to the micro computer 131. Thus, the fan is respectively driven or stopped by a driving signal and an interruption signal of the micro computer 131.

The power supplying unit 120 includes the DC port 121 and the male connector 123 that are described above with reference to FIGS. 1 and 2. In addition, the power supplying unit 120 also includes the secondary battery 122 that may be recharged in the first frame 111. As is described above, the DC port 121 is electrically connected to the male connector 123 so as to supply electric power to the portable electronic appliance 105. In addition, the DC port 121 is electrically coupled to the micro computer 131 of the controller 130 so that the electric power supplied through the power supplying cord 155 (refer to FIG. 1) may be transmitted to the driving motor 136 of the fan 135 by the control of the controller 130. The DC port 121 is also electrically coupled to the secondary battery 122 so that the secondary battery 122 may be recharged.

The secondary battery 122 is electrically connected to the micro computer 131 of the controller 130. The secondary battery 122 is charged by the power supplied through the DC port 121, and is discharged to transmit the power to the driving motor 136 of the fan 135 through the controller 130 when the power cannot be supplied to the fan 135 through the DC port 121.

The male connector 123 is electrically connected to the micro computer 131 of the controller 130. When the power cannot be supplied to the fan 135 through the DC port 121 and the secondary battery 122, the male controller 123 receives the electric power from the portable electronic appliance 105 and transmits the electric power to the driving motor 136 of the fan 135 through the controller 130.

The controller 130 transmits the driving signal to drive the fan 135 when the temperature around the portable electronic appliance 105 is determined to be equal to or higher than a predetermined temperature through the temperature signals transmitted periodically from the temperature sensor 140. In addition, when the temperature around the portable electronic appliance 105 is determined to be lower than the predetermined temperature through the temperature signals, the controller 130 transmits an interruption signal to stop the fan 135 to the driving motor 136.

According to an embodiment of the present invention, a predetermined temperature that suggests that the fan 135 should be driven by the controller 130 is in the range of approximately 45°C - 60°C. In general, when the temperature around the portable electronic appliance 105 is higher than 45°C, elements in the portable electronic appliance 105, in particular, the secondary battery 108 begin to expand to the point of potential failure. Further, if the temperature reaches 60°C, damage that cannot be recovered from, such as a reduction of the life span of the portable electronic appliance 105, is caused. Thus, the fan 135 is driven to prevent such damage from occurring.

Hereinafter, operations of the cradle 110, in which the portable electronic appliance 105 is mounted, will be described with reference to FIGS. 3 and 4.

When electric power is supplied to the DC port 121 of the cradle 110, the electric power is supplied to the portable electronic appliance 105 through the female connector 107 that is connected to the male connector 123, and the secondary battery 122 in the cradle 110 is also charged. Meanwhile, the temperature sensor 140 transmits temperature signals to the controller 130 periodically. If the temperature around the portable electronic appliance 105 is determined to be equal to or higher than a predetermined temperature through the temperature signals, the controller 130 transmits a driving signal to drive the fan 135 to the driving motor 136. When the fan 135 operates, the air (W) flows upward along the path between the portable electronic appliance 105 and the second frame 115. Thus, the portable electronic appliance 105 is cooled.

When the temperature around the portable electronic appliance 105 is decreased by the fan 135 such that the temperature is determined to be lower than the predetermined temperature through the temperature signals from the temperature sensor 140, the controller 130 transmits an interruption signal for stopping the fan 135 to the driving motor 136, and the fan 135 stops operating. Since the temperature sensor 140 transmits the temperature signals periodically to the controller 130, the operation and suspension of the fan 135 is repeated in order to prevent the portable electronic appliance 105 from overheating.

According to another embodiment of the invention, the operation of the fan 135 is continued until the temperature around the portable electronic appliance 105 is lowered significantly below the lower end of the 45°C - 60°C temperature range discussed above. This accounts for the possibility that, upon the stopping of the operation of the fan 135, the temperature around the portable electronic appliance 105 will immediately begin to increase and may likely reach into the 45°C - 60°C temperature range, thus necessitating a re-operation of the fan 135. By significantly lowering the temperature, the need to continually operate and suspend the operation of the fan 135 in relatively short intervals is removed.

According to this embodiment, it is understood that the extent to which the temperature around the portable electronic appliance 105 is lowered may be fixed or may be determined based on ambient temperature readings from an exterior of the portable electronic appliance 105 that would indicate the likelihood of a significant increase in the temperature around the portable electronic appliance 105 upon the stopping of the operation of the fan 135.

Meanwhile, as described above, when the electric power cannot be supplied to the fan 135 through the DC port 121, the electric power may be transmitted to the fan 135 by the discharge of the secondary battery 122 in the cradle 110. When the electric power cannot be supplied to the fan 135 through the DC port 121 and the secondary battery 122, the electric power transmitted from the portable electronic appliance 105 may be supplied to the fan 135 through the male connector 123.

According to the cradle for the portable electronic appliance and the portable electronic appliance set of an embodiment of the present invention, the portable electronic appliance may be cooled down using the fan. Thus, damage to the portable electronic appliance 105 due to overheating is prevented or minimised.

In addition, since the fan operates only when the temperature around the portable electronic appliance 105 is higher than a predetermined temperature, which is recognized as a state in which overheating may occur, the power consumption to cool down the portable electronic appliance may be minimized. Further, a primary battery that cannot be recharged may be included in the cradle for portable electronic appliance instead of the secondary battery.

Although a few embodiments of the present invention have been shown and described, it would be appreciated by those skilled in the art that changes may be made in these embodiments without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A cradle (110) for use with a portable electronic appliance (105), the cradle comprising:
a frame (111), including a mounting portion (112) in which the portable electronic appliance is mounted;
a temperature sensor (140) to measure a temperature around the portable electronic appliance;
a fan (135) to cool down the portable electronic appliance;
a power supplying unit (120) to supply electric power to the fan; and
a controller (130) to drive the fan when the temperature measured by the temperature sensor is determined to be equal to or higher than a predetermined temperature according to measurements of the temperature sensor.

2. The cradle according to claim 1, wherein the predetermined temperature when the controller drives the fan is within a range of approximately 45°C - 60°C.

3. The cradle according to claim 1 or 2, wherein the power supplying unit (120) includes a direct current (DC) port (121) to receive a DC voltage from an exterior of the cradle.

4. The cradle according to claim 3, wherein the power supplying unit (120) includes a connector that is connected to the portable electronic appliance (105), a primary, and/or a secondary battery (122).

5. The cradle according to claim 4, wherein the power supplying unit receives power from the primary and/or the secondary battery (122) when the power supplying unit does not receive the DC voltage through the DC port (121).

6. The cradle according to any preceding claim, wherein the power supplying unit (120) includes a connector (123) that is connected to the portable electronic appliance, a primary, and/or a secondary battery.

7. The cradle according to any preceding claim, wherein the power supplying unit (120) includes a primary and/or a secondary battery (122) to provide power thereto.

8. The cradle according to any preceding claim, further comprising a bracket (117) that is elastically biased in a direction of attaching the portable electronic appliance to the mounting portion.

9. The cradle according to any preceding claim, wherein an air path, through which the fan (135) blows air, is formed between a rear surface of the portable electronic appliance (105) and a surface of the frame (111) facing the portable electronic appliance.

10. The cradle according to any preceding claim, wherein the temperature sensor (140) disposed on the frame (111) proximate to the portable electronic appliance (105).

11. A portable electronic appliance set comprising:
a portable electronic appliance (105); and
a cradle (110) in which the portable electronic appliance is mounted,
wherein the cradle for the portable electronic appliance comprises:
a frame (111), including a mounting portion (112) in which the portable electronic appliance is mounted;
a temperature sensor (140) to measure a temperature around the portable electronic appliance;
a fan (135) to cool down the portable electronic appliance;
a power supplying unit (120) to supply electric power to the fan; and
a controller (130) to drive the fan when the temperature measured by the temperature sensor is determined to be equal to or higher than a predetermined temperature according to measurements of the temperature sensor.

12. The portable electronic appliance set according to claim 11, wherein the predetermined temperature when the controller drives the fan is within a range of approximately 45°C - 60°C.

13. The portable electronic appliance set according to claim 11 or 12, wherein the power supplying unit includes a direct current (DC) port (121) to receive a DC voltage from an exterior of the cradle.

14. The portable electronic appliance set according to claim 13, wherein the power supplying unit (120) includes a connector (123) that is connected to the portable electronic appliance, a primary, and/or a secondary battery (122).

15. The portable electronic appliance set according to any of claims 11-14, wherein the power supplying unit (120) receives power from the primary and/or the secondary battery (122) when the power supplying unit does not receive the DC voltage through the DC port (121).

16. The portable electronic appliance set according to any of claims 11-15, wherein the power supplying unit (120) includes a connector (123) that is connected to the portable electronic appliance, a primary, and/or a secondary battery.

17. The portable electronic appliance set according to any of claims 11-16, wherein the power supplying unit (120) includes a primary and/or a secondary battery (122) to provide power thereto.

18. The portable electronic appliance set according to any of claims 11-17, further comprising a bracket (117) that is elastically biased in a direction of attaching the portable electronic appliance to the mounting portion (112).

19. The portable electronic appliance set according to any of claims 11-18, wherein an air path, through which the fan (135) blows air, is formed between a rear surface of the portable electronic appliance and a surface of the frame (111) facing the portable electronic appliance.

20. The portable electronic appliance set according to any of claims 11-19, wherein the temperature sensor (140) disposed on the frame (111) proximate to the portable electronic appliance.

21. A cradle (110) for use with a portable electronic appliance (105) mounted therein, the cradle comprising:
a temperature sensor (140) to measure an ambient temperature in a vicinity of the portable electronic appliance (105) so as to generate a signal that indicates a temperature of the portable electronic appliance;
a fan (135) to generate an air flow (W) that cools the temperature of the portable electronic appliance when operated; and
a controller (130) to operate the fan when the signal indicates that the temperature of the portable electronic appliance is equal to or higher than a first temperature, and to stop the fan when the signal indicates that the temperature of the portable electronic appliance is equal to or lower than a second temperature.

22. The cradle according to claim 21, wherein the first temperature is within a range of approximately 45°C - 60°C and the second temperature is lower than the first temperature.

23. The cradle according to claim 21 or 22, wherein the power supplying unit (120) includes a connector (123) that is connected to the portable electronic appliance, a primary, and/or a secondary battery (122).

24. The cradle according to claim 23, wherein the power supplying unit (120) receives power from the primary and/or the secondary battery when the power supplying unit does not receive the DC voltage through the DC port (121).

25. The cradle according to any of claims 21-24, wherein the power supplying includes a primary and/or a secondary battery (122) to provide power thereto.

26. The cradle according to any of claims 21-25, further comprising:
a mounting portion (112) in which the portable electronic appliance is mounted; and
a bracket (117) that elastically biases the portable electronic appliance to remain mounted to the mounting portion.

27. The cradle according to any of claims 21-26, further comprising a frame of the cradle (111) to support the mounting of the portable electronic device in the cradle, wherein an air path, through which the fan blows air, is formed between a rear surface of the portable electronic appliance (105) and a surface of the frame (111) facing the portable electronic appliance.
